# EUROPÄISCHE PATENTSCHRIFT

(11) **EP 0 438 468 B1**
(45) Veröffentlichungstag und Bekanntmachung des Hinweises auf die Patenterteilung: **09.06.1993**
(21) Anmeldenummer: 89911548.9
(22) Anmeldetag: 13.10.1989
(51) Int. Cl.: G01N 21/57

(54) **VERFAHREN UND VORRICHTUNG ZUR GLANZMESSUNG**
PROCESS AND DEVICE FOR MEASURING GLOSS
PROCEDE ET DISPOSITIF POUR MESURER LA BRILLANCE

(30) Priorität: 14.10.1988 DE 3835065
(43) Veröffentlichungstag der Anmeldung: 31.07.1991
(73) Patentinhaber: BYK-Gardner GMBH, D-82538 Geretsried (DE)
(72) Erfinder: SCHWARZ, Peter, D-8192 Geretsried (DE)
(74) Vertreter: Wallinger, Michael, Dr.-Ing.
(86) Internationale Anmeldenummer: EP8901218
(87) Internationale Veröffentlichungsnummer: WO9004166

(56) Entgegenhaltungen:
- DE-A- 2 014 295
- DE-A- 3 413 838
- DE-B- 2 448 288
- US-A- 3 999 864
- US-A- 4 455 090

## Beschreibung

Die vorliegende Erfindung betrifft eine Vorrichtung sowie ein Verfahren zur Messung von Glanz.

Glanz ist ein wichtiges Qualitätskriterium z. B. zur Beurteilung der Qualität von Lacken, von Anstrichen, von Kunststoffoberflächen und dergleichen. Die reproduzierbare und aussagekräftige Messung von Glanz ist jedoch außerordentlich schwierig. Physikalisch gesehen kann Glanz als die Eigenschaft einer Oberfläche definiert werden, Licht zu reflektieren. Vom menschlichen Auge wird Glanz jedoch nicht in diesem physikalischen Sinne bewertet, es gibt vielmehr erhebliche physiologische Abweichungen, die eine Standardisierung der Glanzmessung schwierig machen.

In der Bundesrepublik Deutschland gibt es den Entwurf für eine Industrienorm vom November 1980, die DIN 67 350, in der ein Reflexionsverfahren für die Messung von Glanz zur Norm vorgeschlagen wird. Bei diesem Verfahren wird Licht von einer Lichtquelle auf die zu messende Oberfläche geführt, und von dieser Oberfläche über eine zweite Linse zu einer Fotozelle geleitet. Da bereits geringe Abweichungen in der Lage der optischen Einrichtungen zu einer erheblichen Änderung des Lichteinfalles in die Photozelle führen, müssen die Aperturwinkel der verwendeten Blenden und die Ausrichtung der einzelnen optischen Elemente außerordentlich genau sein.

Bekannte Vorrichtungen, die nach diesem Verfahren arbeiten, weisen einen Aluminiumträger für die optischen Einrichtungen auf. Die Vorrichtungen werden geeicht, indem eine Standardoberfläche mit sehr hohem Glanzkennwert, also einer hochglänzenden Oberfläche und eine sogenannte Lichtfalle gemessen werden. Als Lichtfalle wird eine Oberfläche bezeichnet, die keinerlei Reflexion aufweist und somit den Glanzwert Null hat. Bei der bekannten Meßvorrichtung wird also davon ausgegangen, daß der Glanzkennwert, entgegen den physiologischen Gegebenheiten, linear zwischen dem Wert 0 und einem hochglänzenden Wert verläuft. Um Abweichungen durch eine nicht exakte Geometrie der optischen Einrichtungen zu begrenzen, ist bei diesen bekannten Vorrichtungen z. B. die Möglichkeit gegeben, den Aluminiumträger der optischen Einrichtungen zu verwinden, um die optischen Einrichtungen genau auszurichten.

Ein ähnliches Verfahren zur Messung des Glanzes von Oberflächen ist auch durch den International Standard ISO 2813/1978 aus dem Jahre 1978 zur Norm vorgeschlagen worden. In den USA ist die Messung von Glanz durch die Norm ASTM D 523 vereinheitlicht.

Die DE-OS 34 13 838 zeigt ein Meßinstrument zur Messung des Glanzes, bei dem mehrere Sätze von optischen Einrichtungen innerhalb des Gerätes so angeordnet sind, daß damit die Reflexion bei verschiedenen Auftreffwinkeln gemessen werden kann. Dazu sind Meßdetektoren vorgesehen, die das reflektierte Licht aufnehmen und deren elektrische Ausgangssignale durch eine Recheneinheit ausgewertet werden. Dafür ist in der Vorrichtung für jeden Satz von optischen Einrichtungen ein Referenzwert abgespeichert, der dem Meßsignal bei Glanzkennwert 100 entspricht. Die Zwischenwerte werden dann durch Division gewonnen.

Eine weitere Vorrichtung zur Messung von Glanz ist aus der US-A-3,999,864 bekannt. Bei dieser Vorrichtung ist eine Lichtquelle vorgesehen, von der das Licht über mehrere Glasfaserbündel auf die zu messende Oberfläche gerichtet wird. Die Glasfaserbündel sind so angeordnet, daß sie mit unterschiedlichen Winkeln auf die Oberfläche auftreten. Weiterhin sind eine Reihe von Glasfaserbündeln in ebenfalls unterschiedlichen Winkelstellungen als Lichtrezeptoren vorgesehen, von denen das Licht zu einer einzelnen Lichtmeßeinrichtung geführt wird. Von dem Glasfaserbündel, das benachbart zur Lichtquelle angeordnet ist, wird ein weiteres Glasfaserbündel als Referenzquelle unmittelbar zur Lichtmeßeinrichtung geführt. Das Meßglasfaserbündel und das Referenzglasfaserbündel sind kurz vor der Lichteinmessung jeweils unterbrochen. In dem dadurch gebildeten Spalt ist ein drehbarer Monochromator angeordnet, der um 180 Grad seines Umfanges ein Interferenzfilter trägt, und um 180 Grad des Umfanges einen Opakbereich aufweist. Die Messung des Glanzes erfolgt, indem das Gerät zunächst auf eine Vergleichsfläche mit bekanntem Glanzwert und dann auf die zu messende Oberfläche aufgesetzt wird. Aus dem Vergleich zwischen dem für die Vergleichsfläche gemessenen Meßwert und dem Meßwert für die zu messende Oberfläche wird der Glanzkennwert der Oberfläche bestimmt. Das Referenzglasfaserbündel dient bei diesem Meßaufbau dazu, Änderungen in der Intensität der Lichtquelle oder in der Sensitivität des Lchtsensors auszugleichen, da die Messung von Referenzfläche und Oberfläche zu verschiedenen Zeitpunkten erfolgt.

Praktische Erfahrungen mit den bekannten Vorrichtungen zur Messung von Glanz zeigen, daß es sehr wünschenswert wäre, die Genauigkeit dieser Geräte zu verbessern. Weiterhin hat sich gezeigt, daß es sehr schwierig ist, die erforderliche Genauigkeit beim Justieren über eine Verwindung des Trägers zu erzielen.

Der vorliegenden Erfindung liegt deshalb die Aufgabe zugrunde, eine Vorrichtung und ein Verfahren zur Messung von Glanz zu schaffen, welche erheblich genauere Ergebnisse liefert, als dies mit den Geräten des Standes der Technik möglich ist.

Diese Aufgabe wird erfindungsgemäß durch den Gegenstand des Anspruchs 1 gelöst. Das erfindungsgemäße Verfahren ist Gegenstand des Anspruchs 8.

Vorteilhafte Ausgestaltungen der Erfindung sind Gegenstand der Unteransprüche.

Die erfindungsgemäße Vorrichtung hat den Vorteil, daß die Berechnung des Glanzkennwertes sehr viel genauer erfolgen kann, als dies bislang möglich war.

Das erfindungsgemäße Verfahren, das in Anspruch 8 beschrieben ist, schafft ein völlig neues Verfahren zur Auswertung von Glanzmessungen. Bislang wurden die Glanzmessungen in sehr unzulänglicher Weise durch eine lineare Verknüpfung von Referenz-Reflektionsmeßwert und Glanzkennwert ausgewertet. Das erfindungsgemäße Verfahren sieht dagegen vor, daß für jeden Satz optischer Einrichtungen eine bestimmte Anzahl von mindestens 5, vorzugsweise jedoch 10 oder mehr Referenzwertepaare im Gerät fest eingespeichert werden. Diese Referenzwertepaare werden erhalten, indem Referenzoberflächen, wie sie z.B. in der Bundesrepublik Deutschland durch die Bundesanstalt für Materialprüfung in Berlin zu beziehen sind, gemessen und die entsprechenden elektrischen Signalkennwerte in dem Gerät abgespeichert werden. Jedes Wertepaar besteht dabei aus dem eigentlichen Referenz-Glanzkennwert und aus dem elektrischen Signalwert, der innerhalb des Gerätes gemessen wurde. Werden beispielsweise 10 Referenz-Glanzkennwerte im Bereich zwischen 0 und 93 gemessen, so werden die entsprechenden elektrischen Signalwerte dann mit diesen Werten abgespeichert.

Bei der Messung wird der gewonnene elektrische Signalwert mit den abgespeicherten Signalwerten verglichen. Es wird dann festgestellt, zwischen welchen Werten der gemessene Signalwert liegt. Anschließend wird eine Interpolation der dazugehörigen Glanzkennwerte durchgeführt.

Durch dieses erfindungsgemäße Verfahren ist es also möglich, sich dem nicht-linearen Verlauf der Reflexions-Glanzkennwert-Kurve in einer erheblich genaueren Weise anzunähern, als dies die einfache lineare Annäherung im Stand der Technik ermöglicht.

Ein wesentlicher Vorteil der erfindungsgemäßen Vorrichtung ist, daß auch Glanzkennwerte gemessen werden können, die oberhalb des Hochglanzes (Glanzkennwert 93) liegen. Für den Sonderfall der idealen Reflexion geht man von einem Glanzkennwert 1000 aus. Für eine weitgehende ideale Spiegeloberfläche beträgt der Glanzkennwert in etwa 980. Es ist nun möglich, in der Vorrichtung als höchsten Wert den Glanzkennwert 980 mit dem entsprechenden elektrischen Signalwert für diese hochglänzende Spiegelfläche einzuspeichern. Werden 10 Referenzwerte verwendet, wäre dies der zehnte Wert, werden z.B. 16 Referenzwerte verwendet, wäre dies der sechzehnte Wert. Die Vorrichtung kann dann Glanzkennwerte zwischen 0 und 980 zuverlässig erfassen und ist dann auch dazu geeignet, Spiegelglanz zu messen, was mit den im Stand der Technik bekannten Vorrichtungen nicht möglich ist.

Die erfindungsgemäße Vorrichtung ist so gestaltet, daß diese Referenzmessung individuell für jedes Gerät getrennt durchgeführt wird. Die abgespeicherten Wertepaare entsprechen also den Meßwerten, wie sie mit dem jeweiligen, individuellen Gerät erzielt worden sind. Dadurch spielen herstellungsbedingte Abweichungen der einzelnen Geräte keine Rolle mehr.

In der Technik werden die Begriffe "Eichen" und "Kalibrieren" häufig synonym gebraucht. Um die Begriffe von ihrer Bedeutung her zu trennen, wird im nachfolgenden dann von "Eichen" gesprochen, wenn das Einlesen der Referenzwertepaare in die Vorrichtung gemeint ist. "Eichen" in diesem Sinne bedeutet also das Einstellen des grundsätzlichen Zusammenhanges zwischen gemessener Größe und angezeigtem Glanzkennwert. Der Begriff "Kalibrieren" wird verwendet, um eine Feinkorrektur der eingespeicherten Referenzwerte zu bezeichnen.

Bei der zuletzt beschriebenen, zu bevorzugenden Ausführungsform wird also jedes Gerät individuell geeicht.

Gemäß einer zu bevorzugenden Ausführungsform der erfindungsgemäßen Vorrichtung wird diese mit einem Mikroprozessor, vorzugsweise einem Single-Chip-Computer ausgestattet, der die Vergleichsoperationen und die notwendigen Interpolationsoperationen durchführt.

Gemäß einer weiteren, zu bevorzugenden Ausführungsform der Vorrichtung ist die Vorrichtung so gestaltet, daß die Erfassung der Referenz-Wertepaare durch einen außerhalb des Gerätes befindlichen Rechner gesteuert wird. Dies hat den Vorteil, daß kein Programm für die Durchführung der Eichung in dem Gerät abgespeichert werden muß. Die Vorrichtung weist in diesem Fall eine entsprechende mehrpolige Buchse auf, durch die die eingebaute Recheneinrichtung mit einem externen Rechner verbunden werden kann.

Die erfindungsgemäße Vorrichtung kann mit einem einzelnen Satz von optischen Einrichtungen, bestehend aus Lichtquelle, Filter, Blende, erster Linse, zweiter Linse, Blende und Photozelle ausgestattet sein. Das Filter wird verwendet, um die Anteile des nicht-sichtbaren Lichtes der Lichtquelle auszufiltern, so daß nur die für das Auge sichtbaren Längenwellen zur Messung herangezogen werden. Weiterhin ist dieses Filter so beschaffen, daß auch eine Anpassung des Lichtwellenspektrums an die physiologischen Eigenschaften des menschlichen Auges erfolgt. Die entsprechenden Anforderungen werden z. B. in der DIN 67530 unter Verweis auf weitere DIN-Normen beschrieben.

Entsprechend den durch den jeweiligen Meßstandard vorgegebenen Anforderungen werden diese optischen Einrichtungen so angeordnet, daß sich der gewünschte Auftreffwinkel auf die Oberfläche, z. B. 20°, 60° oder 85° ergibt.

Gemäß einer zu bevorzugenden Ausführungsform der Erfindung ist die Vorrichtung so gestaltet, daß sie zwei oder drei Sätze von optischen Einrichtungen aufweist. Diese Einrichtungen sind dann so angeordnet, daß sie die durch die verschiedenen Normen angegebenen Winkelstellungen aufweisen. So können in einer Vorrichtung zum Beispiel optische Einrichtungen im Winkel von 20°, 60° und 85° angeordnet sein, wodurch sich die Anforderungen des ISO-Standardes 2813/1978, der amerikanischen Norm ASTM D 523, der deutschen Norm DIN 67530 und der japanischen Norm JIS 8741 erfüllen läßt. Weiterhin ist es möglich, die drei Sätze von optischen Einrichtungen im Winkel von 20°, 45° und 60° anzuordnen, wodurch sich die Erfordernisse der amerikanischen Norm ASTM D 2457 verwirklichen lassen.

Werden nur zwei Sätze von optischen Einrichtungen verwendet, kann eine Auswahl unter den jeweiligen drei Werten getroffen werden. Zur Erfüllung der japanischen Norm JIS Z 8741 genügt die Anordnung von zwei Sätzen von optischen Einrichtungen, deren Lichtstrahl im Winkel von 20° und 60° zur Oberfläche gerichtet ist.

Die Anordnung von drei Sätzen von optischen Einrichtungen in einer Meßeinrichtung schafft naturgemäß größere Platzprobleme, wenn die Meßeinrichtung weiterhin handlich und klein gestaltet sein soll. Zur Umlenkung des Lichtstrahles wird deshalb bei dieser Ausführungsform bei zumindest einem der Sätze von optischen Einrichtungen aus Glasfaser bestehende Lichtleiter und/oder Prismen verwendet.

Gemäß einer zu bevorzugenden Ausführungsform sind die drei Sätze von optischen Einrichtungen auf einem gemeinsamen Träger und im wesentlichen in einer Ebene angeordnet. Geht man z.B. von einer Verwirklichung der Meßwinkel 20°, 60° und 85° aus, so ist es bei entsprechender Bauweise möglich, die 20°-Meßanordnung und die 60°-Meßanordnung so anzuordnen, daß sie einen gemeinsamen Auftreffpunkt auf der Oberfläche haben und sich dennoch nicht gegenseitig beeinträchtigen. Schwierigkeiten bereitet es jedoch, in eine solche Einrichtung die 85°-Meßanordnung zu integrieren, insbesondere, wenn diese im wesentlichen den gleichen Auftreffpunkt haben soll, wie die 60°-Anordnung und die 20°-Anordnung. Der Lichtstrahl wird deshalb in einer relativ steilen Winkelstellung, d.h. fast 90° zur Oberfläche geleitet und oberhalb der Ebene der Oberfläche mit einem Prisma umgeleitet, so daß der Lichtstrahl die gewünschte 85°-Ablenkung erreicht. Durch diese Ausgestaltung ist es möglich, eine Meßvorrichtung zu schaffen, die in einfacher Weise alle Anforderungen an die Normmeßwinkel erfüllt.

Wie vorstehend ausgeführt, sind Geräte, die mehrere, in unterschiedlichen Winkeln angeordnete Sätze von optischen Einrichtungen aufweisen, im Stand der Technik bereits bekannt. Ein großer Nachteil dieser Geräte besteht jedoch darin, daß sie immer nur nach einem bestimmten Standard messen können. Falls Messungen in verschiedenen Standards, z.B. im amerikanischen und im japanischen und im deutschen Standard durchgeführt werden müssen, ist es erforderlich, drei verschiedene Meßgeräte zu verwenden.

Diesem Nachteil wird gemäß einer bevorzugten Ausführungsform der vorliegenden Erfindung dadurch abgeholfen, daß in der Speichereinrichtung Referenzwertepaare für unterschiedliche Standards abgespeichert sind. Bei dieser Ausführungsform ist dann ein Wählschalter vorgesehen, mit dem der Benutzer vor der Messung einstellt, nach welchem Standard er messen will. Dabei kann das Gerät je nach Anforderungen so ausgelegt werden, daß es in zwei Standards, also z.B. im amerikanischen und deutschen Standard mißt, es ist aber auch möglich, das Gerät so auszulegen, daß es drei oder mehr Standards messen kann. Auf diese Weise wird dann nur noch ein einziges Gerät benötigt, um Meßwerte in unterschiedlichen Standards zu gewinnen.

Um die Genauigkeit des Gerätes auch nach längerer Einsatzdauer zu gewährleisten, ist bei einer zu bevorzugenden Ausführungsform der Vorrichtung eine Möglichkeit vorgesehen, das Gerät zu kalibrieren. Vorzugsweise wird dafür eine Zwei-Parameter-Kalibrierung verwendet. Für diese Kalibrierung wird vorzugsweise eine hochglänzende schwarze Referenzglasfläche verwendet, die einen bekannten Glanzkennwert aufweist. Das Gerät wird dann auf diese Referenzfläche aufgesetzt und so eingestellt, daß es exakt diesen Referenzglanzkennwert erreicht. Dabei wird aber weiterhin die beschriebene Meßmethode mit den Referenzwertepaare beibehalten. Als zweiter Parameter wird der Glanzkennwert Null verwendet. Da dieser Glanzkennwert dadurch definiert ist, daß keine Reflexion auftritt, wird dies in dem Gerät in einfacher Weise dadurch simuliert, daß die Lichtquelle abgeschaltet wird. Vorzugsweise wird die Kalibrierung automatisch durchgeführt, z.B. unter Ausnutzung eines im Gerät vorhandenen Mikroprozessors, der die Kalibrierung, angestoßen durch einen entsprechenden Schalter, nach einem vorgegebenen Programm selbsttätig durchführt.

Gemäß einer weiteren zu bevorzugenden Ausführungsform, die eine besonders leichte Handhabung der Kalibrierung mit sich bringt, ist eine solche Referenzoberfläche bereits fest in einem Aufbewahrungsgehäuse der Vorrichtung integriert. Die Vorrichtung kann dann auf einfache Weise kalibriert werden, indem im Aufbewahrungsgehäuse ein Schalter betätigt wird, der die Kalibrierung in Gang setzt.

Im Ergebnis wird also durch die Erfindung ein Verfahren und eine Vorrichtung zur Glanzmessung geschaffen, die eine wesentlich erhöhte Genauigkeit gegenüber den Geräten im Stand der Technik darstellt.

Weitere Merkmale der Erfindung ergeben sich aus den Ansprüchen und aus der nachfolgenden Beschreibung eines Ausführungsbeispiels in Zusammenhang mit der Zeichnung. Darin zeigt in schematisierter Weise:
- Fig. 1: eine Prinzipdarstellung der optischen Einrichtungen der erfindungsgemäßen Vorrichtung;
- Fig. 2: ein Blockschaltbild der Meßwertverarbeitung;
- Fig. 3: ein Diagramm, welches den Zusammenhang zwischen dem Meßsignal und dem Glanzkennwert darstellt;
- Fig. 4: ein Detail der Fig. 3 zur Erläuterung der Auswertung;
- Fig. 5: ein Ausführungsbeispiel der Erfindung, bei dem drei Sätze von optischen Einrichtungen vorhanden sind.

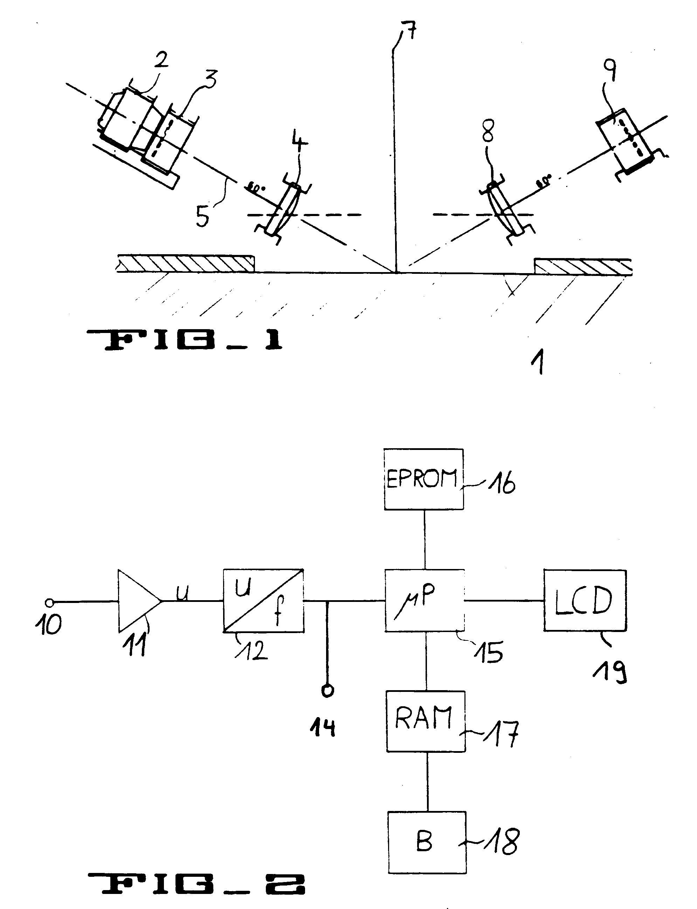

Ein Ausführungsbeispiel der erfindungsgemäßen Vorrichtung wird nachfolgend mit Bezug auf die Figuren 1 bis 5 beschrieben.

Fig. 1 ist eine Prinzipdarstellung der optischen Einrichtungen zur Messung des Glanzes. Auf die zu messende Oberfläche 1 wird der Lichtstrahl einer Lichtquelle 2 gerichtet. Die Lichtquelle 2 ist eine elektrische Lampe. An die Lichtquelle 2 schließt sich eine Blende 3 an. Im Abstand zu dieser Blende 3 ist eine erste Linse 4 angeordnet. Die optischen Einrichtungen sind derart in bezug auf die Oberfläche 1 ausgerichtet, daß sich ein Auftreffwinkel des Lichtstrahles, der schematisch mit 5 bezeichnet ist von 60° ergibt. Der 60°-Winkel ist zur Senkrechten 7 auf die Oberfläche 1 bestimmt. Das reflektierte Licht wird dann durch eine zweite Linse 8 geführt, und tritt in eine Photozelle 9 ein.

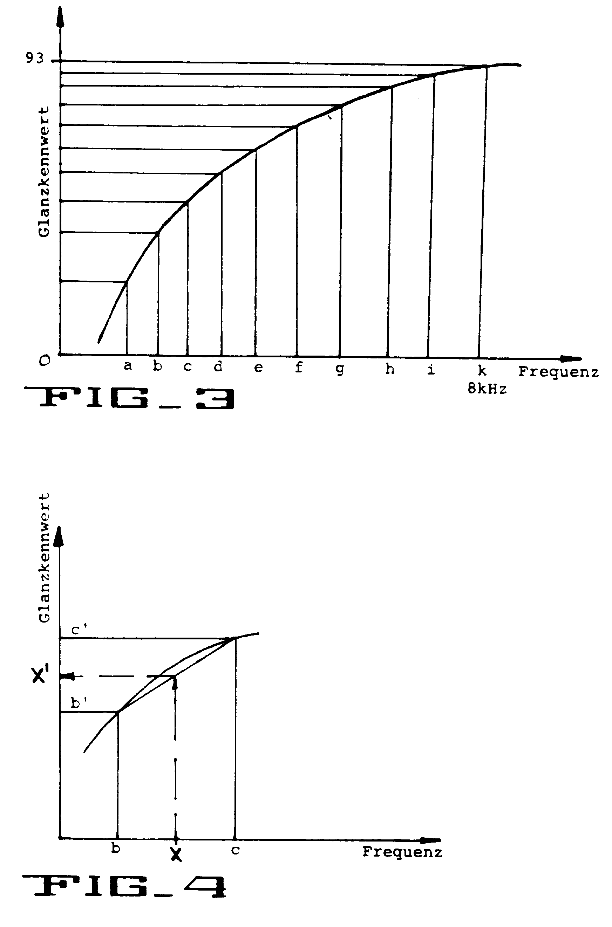

Ein Schema der Meßwertverarbeitung zeigt die Fig. 2: Das Meßsignal, das von der Photozelle 9 erhalten wird, wird der Meßwertverarbeitung am Punkt 10 zugeführt. Das Meßsignal wird zunächst im Verstärker 11 verstärkt. Die dadurch gewonnene Spannung wird dann dem Spannungs-Frequenz-Umsetzer 12 zugeführt. Das Ausgangssignal des Spannungsfrequenzumsetzers 12 wird dann zum Mikroprozessor 15 geleitet. Der Mikroprozessor 15 kann einerseits auf ein EPROM 16 zugreifen, in dem die entsprechenden Programmroutinen gespeichert sind. Des weiteren ist eine Speichereinrichtung 17 vorgesehen, in der Referenz-Wertepaare abgespeichert sind. Die Speichereinrichtung 17 ist ein RAM. Um den Inhalt der Speicher 17 dauerhaft zu erhalten, wird diese Speichereinrichtung über eine Lithiumbatterie 18 mit elektrischer Energie versorgt. Der Mikroprozessor steuert weiterhin ein LCD-Anzeige 19, welche Zahlen und Buchstaben darstellen kann.

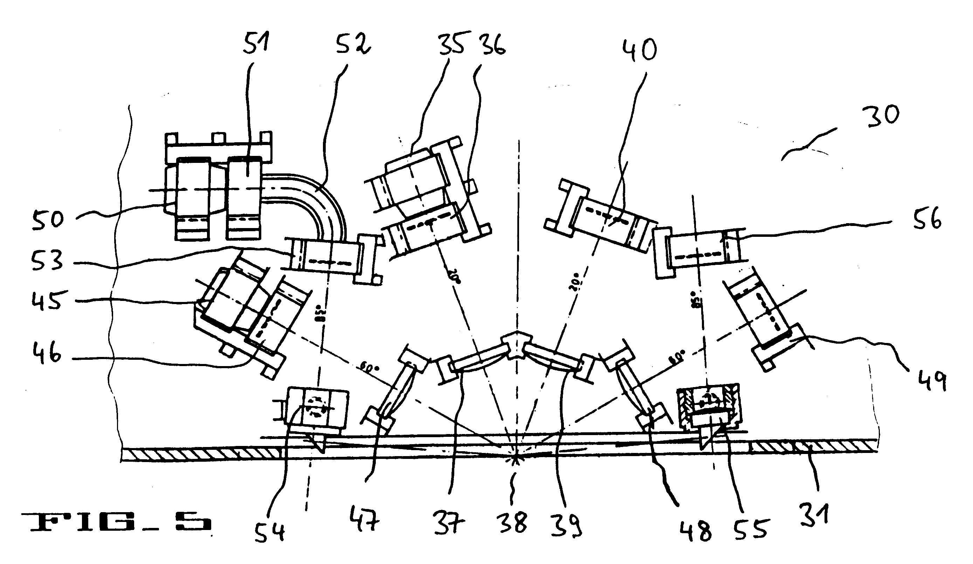

Das Schema der Auswertung der Messung wird nun in bezug auf die Figuren 3 und 4 beschrieben. Fig. 3 zeigt ein Diagramm, auf dessen Abzisse die Frequenz aufgetragen ist, die als Ergebnis der Spannungs-Frequenz-Umsetzung im Umsetzer 12 der Meßeinrichtung erhalten wird. Auf der Ordinate ist der zu der jeweiligen Frequenz gehörige Glanzkennwert eingetragen. Diese Punkte werden gewonnen, indem Referenz-Glanzoberflächen, wie sie von der Bundesanstalt für Materialprüfung zu erhalten sind, mit dem individuellen Gerät gemessen werden. Wie aus der Darstellung der Fig. 3 zu entnehmen ist, ist der Verlauf des Glanz-Frequenz-Zusammenhanges nicht linear. Eine lineare Annäherung, wie dies im Stand der Technik vorgenommen wird, führt deshalb zu erheblichen Abweichungen der Messung gegenüber den Referenzwerten.

Wenn nun eine Oberfläche gemessen werden soll, wird die Vorrichtung zunächst auf die zu messende Oberfläche aufgesetzt. Im unteren Bereich des Gerätes ist eine Öffnung vorhanden, die so bemessen ist, daß der Lichtstrahl, der von der Lichtquelle 2 emittiert wird, ungehindert auf die zu messende Oberfläche auftreffen und von dieser reflektiert werden kann.

Das Licht tritt durch die Blende 3 und durch die Linse 4 und trifft auf die Oberfläche auf. Das reflektierte Licht wird durch die Linse 8 gebündelt und der Photozelle 9 zugeführt. Die Photozelle 9 kann entweder im Kurzschlußbetrieb arbeiten, dann liefert sie einen Strom, oder sie kann im offenen Betrieb arbeiten, dann liefert sie eine Spannung. Das entsprechende Signal der Photozelle wird über den Verstärker 11 verstärkt und gelangt in den Spannungsfrequenz-Umsetzer. Die dort erhaltene Frequenz wird nun von dem Mikroprozessor, der durch ein im EPROM 16 gespeichertes Programm gesteuert wird, mit den einzelnen Frequenzwerten verglichen, die in der Speichereinrichtung 17 für das Gerät individuell gespeichert sind. Die einzelnen Frequenzwerte sind in der Darstellung der Fig. 3 mit den Buchstaben a bis k bezeichnet. Die gemessene Frequenz x wird also mit den einzelnen Frequenzen verglichen und schließlich z.B. festgestellt, daß die gemessene Frequenz zwischen den Frequenzwerten b und c liegt. Die zu diesen Frequenzwerten gehörenden Glanzkennwerte werden aus dem Speicher 17 ausgelesen, und es wird durch eine Interpolation ein Glanzkennwert x' bestimmt, der im entsprechenden Verhältnis zwischen den zu den Frequenzen b und c gehörenden Glanzkennwerten b' und c' liegt.

Das Meßergebnis wird dann in dem Display 19 angezeigt. Das Display 19 ist eine LCD-Anzeige, die, bei diesem Ausführungsbeispiel, sowohl Buchstaben als auch Zahlen darstellen kann. Dadurch ist es möglich, mittels der im EPROM gespeicherten Programmroutinen, dem Benutzer gezielte Informationen über den jeweiligen Betriebszustand der Vorrichtung zu vermitteln.

Es soll darauf hingewiesen werden, daß die in Fig. 2 dargestellten Verbindungen zwischen den einzelnen Elementen nur eine schematische Darstellung sind. Selbstverständlich sind die Elemente in Wirklichkeit durch eine Vielzahl von Datenleitungen miteinander verbunden.

Die Eichung der Vorrichtung wird folgendermaßen vorgenommen: Mit 14 ist ein Datenanschluß bezeichnet, der beim Ausführungsbeispiel als Steckanschluß an der Geräteaußenseite ausgeführt ist. Über diesen Datenanschluß wird die Meßvorrichtung mit einem externen Computer verbunden. Dieser Computer steuert dann, im Zusammenwirken mit dem Mikroprozessor 15, den Eichvorgang. Zum Eichen wird das Gerät nacheinander auf Norm-Glanzkacheln aufgesetzt, die verschiedene Glanzkennwerte aufweisen. In den externen Steuercomputer wird jeweils der definierte Glanzkennwert dieser Referenzoberflächen eingegeben. Das Gerät mißt dann die Reflexion dieser Norm-Glanzkachel unter Verwendung der im Gerät installierten optischen und elektrischen Bauelemente. Der gemessene Signalwert mit dem dazugehörigen Referenz-Glanzkennwert wird dann über den externen Computer in die Speichereinrichtung 17 eingespeichert. Dieser Vorgang wird mit einer Vielzahl von Referenzoberflächen durchgeführt. Als zufriedenstellend hat sich eine Anzahl von 10 - 16 Werten erwiesen. Sobald alle Referenz-Wertepaare in die Speichereinrichtung 17 eingespeichert sind, ist die Eichung beendet. Da die Speichereinrichtung 17 beim Ausführungsbeispiel ein flüchtiger Speicher ist, wird er mit einer Langzeitbatterie 18 ständig unter Strom gehalten, so daß die Meßwerte über viele Jahre erhalten bleiben. Es soll darauf hingewiesen werden, daß es auch möglich ist, eine nicht-flüchtige Speichereinrichtung z.B. ein EEPROM zu verwenden.

In der Darstellung gemäß der Fig. 3 ist der Verlauf der Kurve bis zum Glanzkennwert 93 dargestellt. Wie bereits ausgeführt, ist es jedoch auch möglich, mit der erfindungsgemäßen Meßvorrichtung höhere Glanzkennwerte zu messen. Man speichert dann Glanzkennwerte bis zu einem Wert von ca. 980 mit den dazugehörigen Signalwerten ein.

Wie vorstehend beschrieben gibt es z.B. in der Bundesrepublik Deutschland, in den USA und in Japan je einen unterschiedlichen Standard zur Messung von Glanz. Deshalb mußte bislang z.B. ein Lackhersteller, der den Glanz seiner Lacke in unterschiedlichen Standards angeben will, mehrere Glanzmeßgeräte verwenden, die jeweils für einen bestimmten Standard hergestellt und geeicht sind. Um die Messung von Glanz nach verschiedenen Standards mit nur einem Gerät zu ermöglichen, weist das Ausführungsbeispiel der erfindungsgemäßen Meßvorrichtung einen in Fig. 2 schematisch dargestellten Wählschalter 13 auf, mit dem das Gerät auf verschiedene Standards, im vorliegenden Fall drei Standards, umgeschaltet werden kann. Der Benutzer wählt also vor der Messung aus, ob er z.B. nach dem amerikanischen, dem japanischen oder dem deutschen Standard messen möchte. Im RAM 17 sind in diesem Fall nicht nur die Referenzwertepaare für einen Standard, sondern die Referenzwertepaare für alle drei Standards abgespeichert. Der Mikroprozessor 15 wählt in Abhängigkeit der Stellung des Wählschalters 13 die entsprechenden Wertepaare aus dem RAM 17 aus.

Die Fig. 5 zeigt ein Ausführungsbeispiel, bei dem drei Sätze von optischen Einrichtungen verwendet werden. Die optischen Einrichtungen sind auf einem Kunststoffträger 30 aufgebracht und werden durch Rastelemente gehalten. Als erster Satz optischer Einrichtungen sollen die Einrichtungen beschrieben werden, die das Licht in einem Winkel von 20° zur Oberfläche ausstrahlen. Die Meßvorrichtung weist eine Platte 31 auf, mit der sie auf die zu messende Oberfläche aufgesetzt werden. Die Platte 31 ist vorzugsweise einstellbar in bezug auf den Kunststoffträger 30 angeordnet.

Der erste Satz optischer Einrichtungen besteht aus einer Lichtquelle 35, einer elektrischen Lampe. Direkt neben dieser Lichtquelle 35 ist ein kombiniertes Bauelement 36 angeordnet, das sowohl eine Blende mit definiertem Öffnungswinkel als auch ein Filter aufweist. Das Filter ist so beschaffen, daß es nur das für das menschliche Auge sichtbare Licht durchtreten läßt. Zusätzlich ist das Filter so beschaffen, daß das Licht dem spektralen Hellempfindlichkeitsgrad des hell adaptierten Auges angepaßt ist. Die Einzelheiten dieser Anpassung sind in der deutschen Industrienorm DIN 5031, Teil 2, DIN 5033, Teil 7 und DIN 5036, Teil 1 beschrieben.

Der aus der Blende austretende Lichtstrahl tritt durch die Linse 37 und trifft am Punkt 38 auf die Oberfläche auf. Dieser Punkt 38 ist der eigentliche Meßpunkt. Die Reflexion der Oberfläche am Punkt 38 wird durch die Linse 39 zur Blende 40 zurückgeführt. Die Blende 40 ist mit einer Photozelle verbunden, die im dargestellten Ausführungsbeispiel mit der Blende eine Baueinheit bildet. Das elektrische Signal dieser Photozelle wird dann, wie beschrieben, der Meßwertverarbeitung zugeführt.

Ein zweiter Satz optischer Einrichtungen erzeugt einen Lichtstrahl, der im Winkel von 60° auf die Oberfläche am Meßpunkt 38 auftrifft. Dazu ist eine Lichtquelle 45 vorgesehen, sowie eine Blende mit Filter 46, die identisch aufgebaut sind wie die Lichtquelle 35 und 36 des ersten Satzes optischer Einrichtungen. In gleicher Weise schließt sich dann wiederum die Linse 47 an, die vor dem Meßpunkt 38 angeordnet ist. Das reflektierte Licht wird durch die Linse 48 geführt und tritt in das aus Blende und Photozelle kombinierte Bauelement 49 ein.

Ein dritter Satz optischer Einrichtungen ist dafür vorgesehen, einen Lichtstrahl zu erzeugen, der im Winkel von 85° zur Oberfläche auftritt. Dazu ist eine Lichtquelle 50 vorgesehen, an die sich ein Filter und eine Blende 51 anschließt. Die Lichtquelle und diese Blende sind im wesentlichen parallel zur zu messenden Oberfläche angeordnet. Die Richtung des Lichtstrahles wird dann durch ein Bündel von Glasfasern 52 umgeleitet und durch eine weitere Blende 53 geführt. Von der Blende 53 tritt das Licht dann in ein Prisma 54 ein, von dem es im gewünschten Winkel zum Meßpunkt 38 umgelenkt wird. Nach dem Meßpunkt 38 ist ein zweites Prisma 55 angeordnet, das den Lichtstrahl in Richtung auf ein optisches Element 56 umlenkt, welches wiederum aus einer Blende und einer Photozelle kombiniert ist.

Es ist darauf hinzuweisen, daß alle drei Sätze von optischen Einrichtungen in der gleichen Ebene angeordnet sind.

Um temperaturbedingte Abweichungen zu kompensieren, weist das Ausführungsbeispiel einen temperaturabhängigen Widerstand auf, der in die Versorgungseinrichtung der Lichtquellen integriert ist.

In der Speichereinrichtung 16 des Meßaufbaues der Vorrichtung ist weiterhin eine Programmroutine eingespeichert, die ein Kalibrieren der Vorrichtung erlaubt. Das Kalibrieren ist nicht mit der Eichung, d.h. dem Einlesen der Referenzwertepaare zu verwechseln, es dient lediglich dazu, Abweichungen, die z.B. durch den Nullpunktdrift der elektronischen Bauelemente hervorgerufen werden, zu kompensieren. Für die Kalibrierung wird das Gerät auf eine Referenzoberfläche mit hohem Glanzwert aufgesetzt. Dann wird zunächst die Lichtquelle abgeschaltet, so daß kein Licht in die Photozelle fallen kann. Dadurch wird der Glanzkennwert Null simuliert und der Nullpunkt der Meßeinrichtung entsprechend eingestellt. Anschließend wird der Glanzkennwert der hochglänzenden Oberfläche gemessen und daraus ein Korrekturwert ermittelt, der im RAM 17 abgespeichert und bei der Auswertung berücksichtigt wird.

Bei den vorstehend beschriebenen Ausführungsbeispielen der Meßvorrichtung ist dazu ein spezielles Schutzgehäuse vorgesehen, welches den unteren Teil der Meßvorrichtung umschließt und die Meßöffnung vor dem Eintritt von Schmutzpartikeln schützt. In dieses Schutzgehäuse ist nun eine Referenzoberfläche mit hohem Glanzwert fest eingebaut. Es ist weiterhin ein Schalter am Gerät vorgesehen, mit dem die Kalibrierung in Gang gesetzt werden kann. Das Gerät muß also nur in dieses Schutzgehäuse eingesteckt werden, und es kalibriert sich dann, nach Betätigung dieses Schalters selbst.

Der Kalibrierschalter ist in der Prinzipdarstellung nach Fig. 2 mit dem Bezugszeichen 20 dargestellt.

## Patentansprüche

1. Vorrichtung zur Messung des Glanzes einer Oberfläche (1) mit einer Lichtquelle (2), welche Licht in Richtung der Oberfläche (1) aussendet und einem lichtempfindlichen Sensor (9), der das von der Oberfläche reflektierte Licht aufnimmt und in einen elektrischen Signalwert umwandelt, einer Speichereinrichtung (16, 17), in welcher eine Berechnungsvorschrift zur Berechnung des Glanzkennwertes gespeichert ist, und einer Recheneinrichtung (15), welche aus dem elektrischen Signalwert unter Verwendung der Rechenvorschrift einen Glanzkennwert ermittelt und eine Anzeigeeinrichtung (19), welche den ermittelten Glanzkennwert anzeigt, **dadurch gekennzeichnet,**
daß in der Speichereinrichtung (17) mindestens fünf, vorzugsweise jedoch zehn oder mehr Referenzwertepaare abgespeichert sind, wobei jedes Referenzwertepaar aus einem Referenz-Glanzkennwert und einem mittels der Vorrichtung unter Verwendung einer Referenzoberfläche gemessenen zugehörigen Referenz-Signalwert besteht, daß eine Vergleichseinrichtung (15) vorgesehen ist, welche den gemessenen Signalwert mit diesen Referenz-Signalwerten vergleicht, um festzustellen, welches der nächst niedrigere elektrische Referenz-Signalwert und der nächst höhere elektrische Referenz-Signalwert ist, und daß die Glanzkennwerte, die zu diesen nächst niedrigeren und nächst höheren ReferenzSignalwerten gehören, einer Interpolationseinrichtung zugeführt werden, um den gesuchten Glanzkennwert zu bestimmen.

2. Vorrichtung gemäß Anspuch 1, dadurch gekennzeichnet, daß die Vergleichseinrichtung, die Interpolationseinrichtung und die Recheneinrichtung in einer Mikroprozessor-Einrichtung (15) zusammengefaßt sind, welche durch ein in einem Speicher (16) abgespeichertes Programm gesteuert wird.

3. Vorrichtung gemäß mindestens einem der vorhergehenden Ansprüche, dadurch gekennzeichnet, daß als optische Einrichtungen neben der Lichtquelle (2) und dem lichtempfindlichen Sensor (9), der vorzugsweise als Photozelle ausgebildet ist, weiterhin eine im Strahlengang nach der Lichtquelle angeordnete Blende (3), ein Filter, eine erste Linse (4), welche vor der Stelle angeordnet ist, an der das Licht auf die zu messende Oberfläche (1) fällt, eine zweite Linse (8), welche im Strahlengang nach der Stelle angeordnet ist, an der das Licht auf die zu messende Oberfläche fällt, sowie eine Blende, die unmittelbar vor dem lichtempfindlichen Sensor angeordnet ist, vorgesehen sind.

4. Vorrichtung gemäß mindestens einem der vorhergehenden Ansprüche, dadurch gekennzeichnet, daß zwei oder drei Sätze von optischen Einrichtungen vorgesehen sind, welche jeweils eine Lichtquelle und einen lichtempfindlichen Sensor sowie Linsen usw. aufweisen, welche in verschiedenen Winkeln, z.B. mit 20°, 65° oder 85°, zur Oberfläche gerichtet sind.

5. Vorrichtung gemäß mindestens einem der vorhergehenden Ansprüche, dadurch gekennzeichnet, daß in der Vorrichtung eine Programmspeichereinheit (16) vorgesehen ist, welche ein Programm beinhaltet, welches einen Mikroprozessor (15) derart steuert, daß eine Nachkalibrierung des Gerätes mit einer Referenzoberfläche durchgeführt wird.

6. Vorrichtung gemäß Anspruch 5, dadurch gekennzeichnet, daß die Vorrichtung ein Aufbewahrungsgehäuse aufweist, in welchem eine derartige Referenzoberfläche integriert ist.

7. Vorrichtung gemäß mindestens einem der Ansprüche 1 bis 6, dadurch gekennzeichnet, daß in der Speichereinrichtung mindestens zwei Gruppen von Referenzwertepaaren abgespeichert sind, wobei jede Gruppe zu einem bestimmten Glanzmeßstandard gehört und daß eine Schalteinrichtung vorgesehen ist, durch die die Recheneinrichtung (15) so gesteuert wird, daß jeweils die der Schalterstellung zugeordnete Glanzmeßstandard-Referenzwertegruppe zur Ermittlung des Glanzkennwertes verwendet wird.

8. Verfahren zur Messung von Glanz mit einer optischen Einrichtung, welche zumindest eine Lichtquelle (2) aufweist, welche Licht in Richtung der zu messenden Oberfläche (1) aussendet und einen lichtempfindlichen Sensor (9), der das von der Oberfläche reflektierte Licht aufnimmt und in einen elektrischen Signalwert umwandelt, dadurch gekennzeichnet, daß der gemessene Signalwert mit einer Anzahl von mindestens 5, vorzugsweise jedoch 10 oder mehr Referenzwertepaaren verglichen wird, welche jeweils aus einem elektrischen Referenz-Signalwert und einem dazugehörigen Glanzkennwert bestehen, wobei der jeweilige Referenz-Signalwert durch Messung einer entsprechenden Referenzoberfläche gewonnen wurde, daß durch diesen Vergleich festgestellt wird, welches der nächst niedrigere elektrische Referenz-Signalwert und der nächst höhere elektrische Referenz-Signalwert ist und daß dann aus den zu diesen nächst niedrigeren und nächst höheren Referenz-Signalwerten gehörenden Glanzkennwerten durch Interpolation der Glanzkennwert der zu messenden Oberfläche bestimmt wird.

9. Verfahren gemäß Anspruch 8, dadurch gekennzeichnet, daß die Interpolation als lineare Interpolation durchgeführt wird.

10. Verfahren gemäß Anspruch 8 oder 9, dadurch gekennzeichnet, daß ein Korrekturwert abgespeichert wird, durch den eine Feinanpassung der Referenz-Glanzkennwerte im Wege einer Nachkalibrierung möglich ist.

## Claims

1. A device for measuring the gloss of a surface (1) by means of a light source (2) projecting light in the direction of said surface (1) and a light-sensitive sensor (9) receiving the light reflected from said surface and converting it into an electrical signal value, means (16, 17) for storing a program routine for computing the characteristic gloss value and means for establishing a characteristic gloss value from said electrical signal value by means of said program routine and means for displaying said established characteristic gloss value, characterized in that said storage means (17) holds at least five, but preferably ten or more reference value pairs, each pair consisting of a reference characteristic gloss value and a corresponding reference signal value measured by means of the device on the basis of a reference surface, in that a means is provided which compares the measured signal value with said reference signal values for determining which is the next lower electric reference signal value and the next higher electric reference signal value and in that the characteristic gloss values belonging to these next lower and next higher reference signal values are supplied to an interpolation for determining the characteristic gloss value of the surface being measured.

2. A device according to claim 1 characterized in that said comparison means, interpolation means and computing means are grouped together in a microprocessor means (15) which is controlled by a program held in a storage means (16).

3. A device according to any of the previous claims characterized in that the optical means, in addition to the light source (2) and the light-sensitive sensor (9) which is preferably provided in the form of a photocell, comprise in the beam path following the light source a diaphragm (3), a filter, a first lens (4) located before the position in which the light falls on the surface being measured, a second lens (8) located in the beam path following this position at which the light falls on the surface being measured, as well as a diaphragm which is arranged immediately prior to the light-sensitive sensor.

4. A device according to any of the previous claims characterized in that two or three sets of optical means are provided, each of which features a light source and a light-sensitive sensor as well as lens, etc. arranged at various angles e.g. at 20°, 65° or 85° to the surface being measured.

5. A device according to any of the previous claims characterized in that the device contains program memory means (16) holding a program for controlling a microprocessor (15) in such a way that recalibration of the apparatus is implemented on the basis of a reference surface.

6. A device according to claim 5 characterized in that the device comprises a mounting case in which a reference surface of the said kind is integrated.

7. A device according to any of the previous claims 1 to 6 characterized in that in the memory means at least two groups of reference value pairs are held, each group belonging to a specific gloss measuring standard and wherein switching means are provided for controlling the computing means in such a way that each reference value group of the gloss measuring standard assigned to the switch position is used to establish the characteristic gloss value.

8. A method of measuring gloss by means of an optical device comprising at least one light source (2) projecting light in the direction of the surface (1) being measured and a light-sensitive sensor (9) receiving the light reflected from said surface and converting it into an electrical signal value, characterized in that the measured signal value is compared with a plurality of at least 5, but preferably 10 or more reference value pairs, each pair consisting of an electrical reference signal value and a corresponding characteristic gloss value, each reference signal value being obtained by measuring a corresponding reference surface, and in that by this comparison it is determined which is the next lower electric reference signal value and the next higher electric reference signal value and in that the characteristic gloss values belonging to these next lower and next higher reference signal values are established by interpolating the characteristic gloss value of the surface being measured.

9. A method according to claim 8 characterized in that the interpolation is implemented as a linear interpolation.

10. A method according to claim 8 or 9 characterized in that a correction value is stored by means of which precision matching of the reference characteristic gloss values is possible on the basis of recalibration.

## Revendications

1. Dispositif de mesure du brillant d'une surface (1), comportant une source lumineuse (2) qui émet de la lumière en direction de la surface (1), un capteur (9) photosensible qui capte la lumière réfléchie par la surface et la transforme en un signal électrique, un système de mémorisation (16, 17) dans lequel est mémorisée une table de calcul pour le calcul la caractéristique de brillant, un système de calcul (15) qui, à partir du signal électrique, calcule une caractéristique de brillant en utilisant la table de calcul et un dispositif d'affichage (19) qui affiche la caractéristique de brillant calculée, caractérisé par le fait que le système de mémorisation (17) contient au moins cinq couples de valeurs de référence, de préférence dix ou plus, chaque couple de valeurs de référence étant composé d'une caractéristique de référence de brillant et d'un signal de référence correspondant mesuré à l'aide du dispositif en utilisant une surface de référence, par le fait qu'il est prévu un dispositif comparateur (15) qui compare le signal mesuré auxdits signaux de référence afin de déterminer les signaux de référence électriques inférieur et supérieur les plus proches et par le fait que les caractéristiques de brillant qui correspondent aux signaux de référence inférieur et supérieur les plus proches sont transmises à un dispositif d'interpolation afin de déterminer la caractéristique de brillant recherchée.

2. Dispositif selon la revendication 1, caractérisé par le fait que le dispositif comparateur, le dispositif d'interpolation et le système de calcul sont regroupés dans un système à micro-processeur (15) qui est commandé par un programme stocké dans une mémoire (16).

3. Dispositif selon l'une au moins des revendications précédentes, caractérisé par le fait qu'il est prévu comme systèmes optiques, outre la source lumineuse (2) et le capteur photo-sensible (9), lequel se présente de préférence sous la forme d'une cellule photo-électrique, un diaphragme (3) placé à la suite de la source lumineuse sur le trajet des rayons lumineux, un filtre, une première lentille (4) qui est placée sur le trajet des rayons lumineux, en amont du point d'incidence de la lumière sur la surface (1) à mesurer, une deuxième lentille (8) qui est placée sur le trajet des rayons lumineux, en aval du point d'incidence de la lumière sur la surface (1) à mesurer et un diaphragme qui est placé juste devant le capteur photo-sensible.

4. Dispositif selon l'une au moins des revendications précédentes, caractérisé par le fait qu'il est prévu deux ou trois jeux de systèmes optiques qui comportent chacun une source lumineuse, un capteur photo-sensible ainsi que des lentilles, etc. qui sont dirigés sur la surface avec des angles différents, par exemple 20°, 65° ou 85°.

5. Dispositif selon l'une au moins des revendications précédentes, caractérisé par le fait que le dispositif comporte une unité de mémorisation de programme (16) qui contient un programme qui commande un micro-processeur (15) de manière à effectuer une vérification de l'étalonnage de l'appareil avec une surface de référence.

6. Dispositif selon la revendication 5, caractérisé par le fait qu'il comporte un boîtier de rangement dans lequel est intégrée une surface de référence du type indiqué.

7. Dispositif selon l'une au moins des revendications 1 à 6, caractérisé par le fait que deux groupes au moins de couples de valeurs de référence sont mémorisés dans le système de mémorisation, chaque groupe appartenant à un standard donné de mesure du brillant, et par le fait qu'il est prévu un système de commutation qui commande le système de calcul de telle sorte que, pour la détermination de la caractéristique de brillant, on utilise le groupe de paires de valeurs de référence correspondant à la position du système de commutation.

8. Procédé de mesure du brillant au moyen d'un dispositif optique qui comprend au moins une source lumineuse (2) qui émet de la lumière en direction de la surface (1) à mesurer et un capteur (9) photo-sensible qui capte la lumière réfléchie par la surface et la transforme en un signal électrique la lumière réfléchie par la surface, caractérisé par le fait que l'on compare le signal mesuré à au moins cinq, de préférence dix couples de valeurs de référence ou plus, lesquels couples sont formés d'un signal électrique de référence et d'une caractéristique de brillant associée, le signal de référence étant obtenu par mesure d'une surface de référence adaptée, par le fait que l'on détermine par cette comparaison les signaux électriques de référence inférieur et supérieur les plus proches et par le fait que l'on détermine la caractéristique de brillant de la surface à mesurer par interpolation à partir des caractéristiques de brillant correspondant auxdits signaux électriques de référence inférieur et supérieur les plus proches.

9. Procédé selon la revendication 8, caractérisé par le fait que l'interpolation est une interpolation linéaire.

10. Procédé selon la revendication 8 ou 9, caractérisé par le fait que l'on mémorise une grandeur de correction qui permet une adaptation fine des caractéristiques de référence de brillant au cours d'une opération de vérification de l'étalonnage.
